# EUROPEAN PATENT SPECIFICATION

(11) **EP 2 977 137 B1**
(45) Date of publication and mention of the grant of the patent: **19.07.2017**
(21) Application number: 15178345.3
(22) Date of filing: 24.07.2015
(51) Int. Cl.: B23D 33/02, B23D 31/00

(54) **MACHINE FOR CUTTING METAL SECTIONS**
MASCHINE ZUM SCHNEIDEN VON METALLABSCHNITTEN
MACHINE POUR COUPER DES SECTIONS MÉTALLIQUES

(30) Priority: 25.07.2014 IT MI20141360
(43) Date of publication of application: 27.01.2016
(73) Proprietor: Montalbetti S.p.A., 21050 Cairate (VA) (IT)
(72) Inventor: MONTALBETTI, Piero, 21050 CAIRATE (VA) (IT)
(74) Representative: Ottazzo, Marco Francesco Agostino

(56) References cited:
- WO-A1-85/00544
- WO-A1-2010/064591
- DE-A1-102010 026 191
- DE-C- 527 988
- FR-A- 483 566
- US-A- 4 346 828
- US-A- 4 444 345
- US-A- 4 552 291
- US-A- 4 620 525
- US-A- 4 646 954
- US-A- 5 407 116

## Description

The present invention relates to a machine for cutting metal sections, in particular for cutting railway line tracks, according to the preamble of independent claim 1. Several techniques are currently known for cutting metal sections. These metal sections may consist, for example, of railway tracks scrapped for wear or damage.

This operation generally requires that the track to be replaced is cut on site by an operator through the use of a portable cropper. Such known croppers usually comprise a diamond cutting disc, powered by an electric or endothermic motor, which acts on the track with abrasive effect.

The cropper comprises a support arm, consisting of two articulated joints which allow anchoring the cropper to the track during the operation, and decrease the weight to be supported by the operator. Additionally, these croppers comprise vibration absorbers on the handles, adapted to reduce the physical damage and the muscle tension of the operator during the cutting operation.

The use of croppers for cutting tracks has several drawbacks, such as the risks due to the inhalation of harmful dust released during the operation, the risks of very hot flying metal splinters and debris, as well as the risks of damage to the hearing due to loud noise.

In order to obviate these drawbacks, the tracks are generally removed from the crosspieces and transported to a construction site, to be cut by a shearing machine. Such known shearing machines usually comprise grippers for holding the track, comprising at least one cutting blade, and are moved by an oil hydraulic motor.

The shearing machines are mounted in place of the arm of an excavator, and the operator cuts the track by operating the shearing machine from the driving cab of the excavator. In this way, the operator is in safety conditions during the operation. Such shearing machines, however, do not eliminate the projection of metal splinters nor the loud noise caused by the breakage of the track.

Document US-A-4646954 describes an apparatus for cutting railway line tracks according to the preamble of claim 1. This apparatus, however, does not allow the adjustment of the shearing length of every single track, which is instead fixed and determined by the abutment profile on which a breaking piston is mounted. In document US-A-4646954, the breaking does not occur by direct pressure caused by the breaking piston on the track, but through a lever ratio generated between such a breaking piston and a fulcrum system which also acts as an abutment for limiting the length of track stretch to be cut.

In the machine for cutting metal sections according to the present invention, as will be better shown hereafter, the shearing piston instead acts directly on the section (track). Such a system, unlike that described in document US-A-4646954, drastically reduces the occurrence of blockages and malfunctions of the machine even in the case of particularly ductile sections, which can thus be deformed and become jammed in the abutment and shearing profile of the machine itself.

The track pulling system described in document US-A-4646954 is based on the motion of rollers, for which there is no control on the correct position of the track, on the amount of tracks loaded on the apparatus and on the proper alignment of such tracks with respect to the engraving and breaking system, so it is assumed that frequent blockages and breakage of the apparatus can occur. The blockage of the pulling system before the breaking must be carried out by an operator, who is forced to only visually ascertain the correct positioning of the track and actuate each time the shearing control. In the machine for cutting metal sections according to the present invention, however, this is not necessary since the pulling and shearing system is completely controlled by a control device (*Programmable Logic Controller* or PLC).

Each track, in order to be effectively sheared in the apparatus according to document US-A-4646954, is placed in an oblique position on the rollers. This arrangement dramatically reduces the contact surface between the track and the rollers as well as the contact surface with the holding system. Finally, in the apparatus according to document US-A-4646954 there are no systems for holding each track in axis within the path defined by the rollers. This gives rise, during the breaking step, to strong shaking and to the possible fall of the track stretch from the feeding rollers.

Document US-A-4552291 describes an apparatus for cutting tracks in which the adjustment of the cutting length is carried out by means of an abutment plate which can be moved, relative to the frame of the apparatus itself, to predetermined positions and thus only by predefined length stretches. In the machine for cutting metal sections according to the present invention, which is provided with a pulling system with hydraulic pistons and not by means of rollers, the cutting length can instead be selected in a variable and progressive manner.

The track pulling system of the apparatus according to document US-A-4552291 is based on the motion of a belt resting on rollers. Consequently, there is no control on the correct position of the track, on the amount of tracks loaded on the apparatus and on the proper alignment of such tracks with respect to the engraving and breaking system. Also in this case, therefore, it is assumed that frequent blockages and breakage of the apparatus may occur.

In the apparatus according to document US-A-4552291, the blocking of the pulling system before the breakage must be carried out by an operator. The operator is thus forced to only visually ascertain the correct positioning of the track and actuate each time the shearing control. In the machine for cutting metal sections according to the present invention, however, this is not necessary since the pulling and shearing system is completely controlled by a control device (*Programmable Logic Controller* or PLC).

Also in the apparatus according to document US-A-4552291 the track, in order to be cut, is placed in an oblique position on the feeding rollers. This arrangement dramatically reduces the contact surface between the track and the rollers as well as the contact surface with the holding system. Finally, also in the apparatus according to document US-A-4552291 there are no systems for holding each track in axis within the path defined by the rollers. This gives rise, during the breaking step, to strong shaking and to the possible fall of the track stretch from the feeding rollers.

Document WO-A-85/00544 relates to a self-propelled machine which removes the entire railway seat installed. This machine is configured for totally different purposes from those of the machine for cutting metal sections according to the present invention. In fact, the machine according to the present invention is configured specifically for the size reduction of tracks already removed from the railway seat, or even tracks never installed, as well as for machining scraps of the metal section industry in general. The activities for which the machine according to the present invention has been designed do not involve the dismantling of a railway line. The self-propelled machine of document WO-A-85/00544 is instead configured to work on railway lines still installed, complete with sleepers to be removed from the respective seat.

Finally, document US-A-4444345 involves removing and cutting a railway line track installed, similar to that described in document WO-A-85/00544. As already mentioned, this is not the purpose of the machine for cutting metal sections according to the present invention.

The object of the present invention is to overcome the drawbacks mentioned above, and in particular to devise a machine for cutting metal sections, in particular for cutting railway line tracks, able to prevent the spreading of metal splinters and the loud noise due to the breaking of the track.

Another object of the present invention is to provide a machine for cutting metal sections with automatic operation, which does not require the presence of an operator during the cutting of the tracks.

These and other objects according to the present invention are achieved by making a machine for cutting metal sections as described in claim 1.

Further features of the invention are highlighted in the dependent claims, which are an integral part of the present description.

The features and the advantages of a machine for cutting metal sections according to the present invention will become apparent from the following exemplary and non-limiting description, made with reference to the accompanying schematic drawings, in which:
figure 1 is a schematic front view of a preferred embodiment of a machine for cutting metal sections according to the present invention;
figure 2 is a schematic partial view, sectional according to a plane parallel to the ground, of the machine for cutting metal sections of figure 1; and
figures 3a-3g are seven schematic partial views, sectional according to a plane parallel to the ground, of the machine for cutting metal sections of figure 1, when said machine carries out the operation of cutting a metal section.

With reference to the figures, there is shown a machine for cutting metal sections, in particular for cutting railway line tracks, globally indicated with reference numeral 10.

Machine 10 for cutting metal sections comprises motorized cutting means 11 for cutting at least one metal section 13, and at least one box-shaped frame 14 arranged for enclosing said motorized cutting means 11.

In a particular embodiment of the invention, such motorized cutting means 11 are driven by a motor unit 12 including an oil hydraulic motor in turn started by an endothermic diesel motor.

The above metal section 13 is a straight metal beam having a double asymmetric T section, typical of a railway line track. In a particular embodiment, such a metal section 13 has a length of twelve meters.

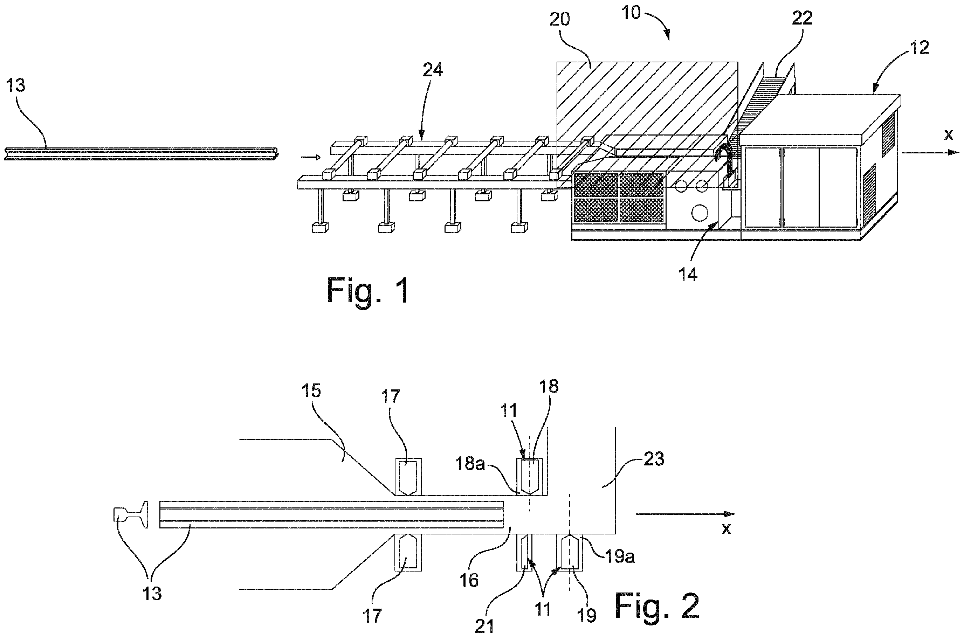

The box-shaped frame 14 comprises an inlet channel 15 and a support and guiding strip 16, such a support and guiding strip 16 defining an axis X with its symmetry axis, as shown in figure 2. In a particular embodiment of the invention, the inlet channel 15 has a V profile. In a particular embodiment of the invention, axis X is parallel to the ground. Such a support and guiding strip 16 is arranged so that a single metal section 13 can be at least partly rested thereon, so as to lie along axis X as shown in figure 2, and can be guided towards the motorized cutting means 11.

The box-shaped frame 14 comprises holding means 17 of the metal section 13, adapted to hold the metal section 13 during the cutting operation. The holding means 17 are motorized and are moved by the motor unit 12, so as to also pull the metal section 13 along the support and guiding strip 16. In particular, the holding and pulling means are moved by the motor unit 12 so as to advance the metal section 13 by a predefined stretch of variable length, allowing the adjustment of the cutting length in a variable and progressive manner.

In a particular embodiment, the box-shaped frame 14 can take the shape of a convex or concave polyhedron and can be made of steel or aluminum.

The operation of machine 10 for cutting metal sections is as follows: the metal section 13 is inserted into the box-shaped frame 14 resting on the support and guiding strip 16, the holding and pulling means 17 come into operation and hold the metal section 13, the motorized cutting means 11 come into operation and carry out the cutting operation, repeating it until the metal section 13 is broken into fragments.

According to the present invention, the motorized cutting means 11 for cutting the metal section 13 comprise at least one contrasting cylinder 18 and at least one breaking cylinder 19. The contrasting cylinder 18 and the breaking cylinder 19 are housed into respective compartments 18a and 19a obtained in the box-shaped frame 14. Each of the two contrasting 18 and breaking 19 cylinder is capable of translating along its symmetry axis, such symmetry axes being perpendicular to axis X, as shown in figure 2. The contrasting cylinder 18 and the breaking cylinder 19 simultaneously engage the metal section 13, generating a bending moment on it which initially causes the plastic deformation and then the bending failure thereof.

Moreover, according to the invention, machine 10 for cutting the metal sections comprises at least one shielding barrier 20 configured for preventing the violent spreading of metal splinters due to the bending failure of the metal section 13.

Preferably, the contrasting cylinder 18 and the breaking cylinder 19 consist of two hydraulic pistons.

Preferably, the motorized cutting means 11 comprise at least one engraver 21 of the section adapted to make an engraving 21a on the metal section 13 to facilitate the bending failure thereof. Such an engraver 21 of the section comes into operation shortly before or during the action of the contrasting cylinder 18 and of the breaking cylinder 19. In a particular embodiment of the invention, such an engraver 21 of the section has a symmetry axis coincident with the symmetry axis of the contrasting cylinder 18, is arranged in a symmetrical position of the contrasting cylinder 18 with respect to axis X and moves in opposite direction with respect to the direction defined by the translation of the contrasting cylinder 18.

Preferably, such an engraver 21 for engraving the section is an oil hydraulic piston comprising a punch housed in a compartment obtained in the oil hydraulic piston itself. When such an oil hydraulic piston engages the metal section 13, such a punch is activated in a sequence to the contrasting cylinder 18 and makes the engraving 21a on the metal section 13.

Preferably, the holding means 17 consists of two oil hydraulic pistons whose symmetry axes are coincident and are perpendicular to axis X, such oil hydraulic pistons being positioned in the proximity of the inlet channel 15, symmetrically with respect to axis X. Such oil hydraulic pistons are configured for translating both along their symmetry axis and along a direction perpendicular to their symmetry axis. When they translate along their symmetry axis, each oil hydraulic piston translates with a direction opposite to that of the other. When they translate along the direction perpendicular to their symmetry axis, the translation direction of the oil hydraulic pistons is the same.

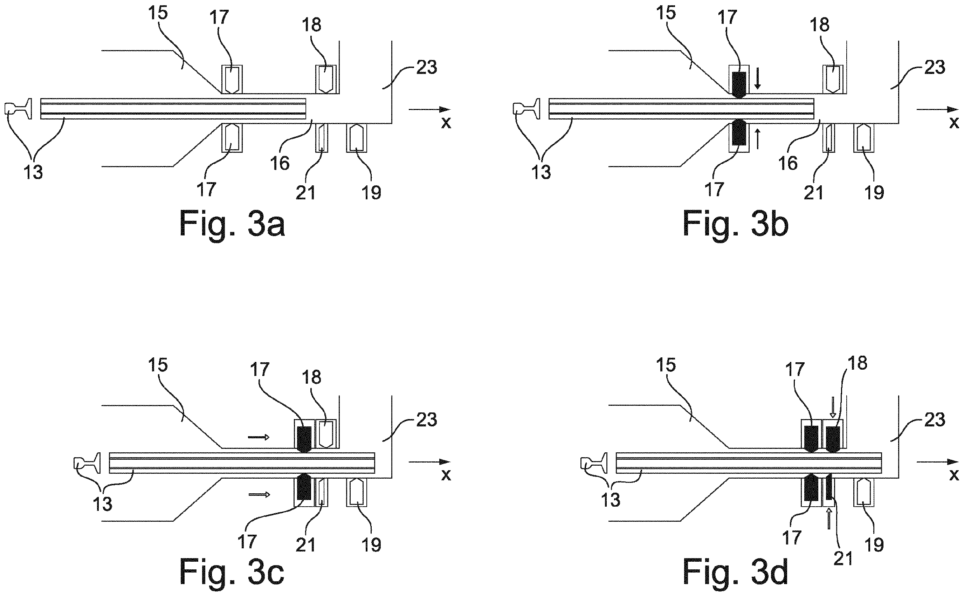

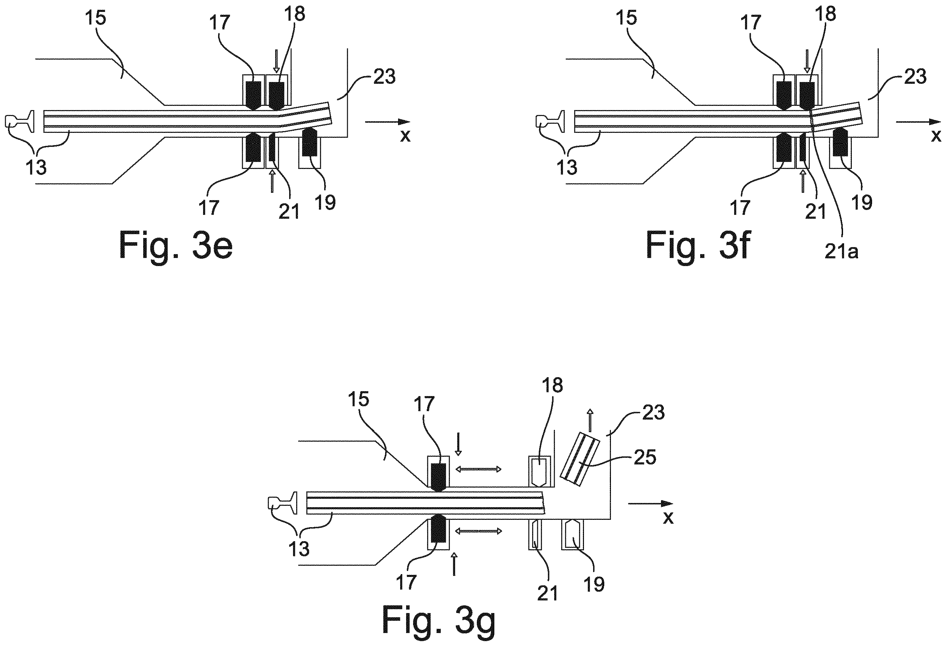

When the metal section 13 is placed on the support and guiding strip 16, the oil hydraulic pistons translate along their symmetry axis, simultaneously engage the metal section 13 and thus they grasp it in a clamp, as shown in figure 3b. Subsequently, the oil hydraulic pistons translate perpendicularly to their symmetry axis towards the motorized cutting means 11, moving the metal section 13 in a suitable position for starting the cutting operation, as shown in figure 3c. Finally, the oil hydraulic pistons translate along their symmetry axis releasing the metal section 13, then they translate perpendicularly to their symmetry axis towards the inlet channel 15 to restart the cycle as shown in figure 3g.

Preferably, machine 10 for cutting metal sections comprises at least one section transporter 24 configured for transporting the metal section 13 towards the holding means 17. In a particular embodiment of the invention, such a section transporter 24 consists of an idle roller conveyor.

Preferably, the shielding barrier 20 is made of soundproofing material, configured for absorbing the sound energy generated by the bending failure of the metal section 13, as well as for preventing the spreading of sound in the environment surrounding machine 10 for cutting metal sections.

Preferably, the box-shaped frame 14 comprises at least one fragment discharger 22 configured for discharging at least one fragment 25 of the metal section 13 from the box-shaped frame 14 following the occurrence of the bending failure. In a particular embodiment of the invention, such a fragment discharger 22 is a conveyor belt.

Preferably, the box-shaped frame 14 comprises at least one fragment conveyor 23 configured for conveying at least one fragment 25 of the metal section 13 towards the fragment discharger 22 following the occurrence of the bending failure. In a particular embodiment of the invention, such a fragment conveyor 23 is a chute.

Machine 10 for cutting metal sections is operated by a control device (*Programmable Logic Controller* or PLC). Preferably, the control device is controlled by a portable device, which in a particular embodiment of the invention is a radio control.

Machine 10 for cutting metal sections described herein can be used for cutting metal sections, in particular railway line tracks, as follows. A first step consists in arranging at least one metal section 13 within the box-shaped frame 14, as shown in figure 3a. The metal section 13 is then held by the holding means 17, as shown in figures 3b and 3c. Subsequently, the bending failure of the metal section 13 is caused by generating a bending failure moment on the metal section 13 itself by means of the contrasting cylinder 18 and of the breaking cylinder 19, as shown in figures 3d, 3e and 3f.

Machine 10 for cutting metal sections can be embedded in a system comprising loading means adapted to load at least one metal section 13 on machine 10 for cutting metal sections, starting the cutting process. In a particular embodiment, such loading means consist of a portable crane or an excavator on the arm of which a pincer is mounted for lifting and moving the metal section 13.

The features of the device object of the present invention as well as the relevant advantages are clear from the above description:
- the section holding and pulling system is controlled by the control device supplied with the machine so that, once a section has been inserted, the machine itself carries out the pulling and the cutting up to the insertion of the next section, without the need for the operator's intervention;
- the system for inserting the section in the shearing module, coupled with the roller conveyor, during the section breaking step which occurs in the front part thereof, causes the remaining rear part of the section to remain stable on the roller conveyor, without shaking and risk of falling of the section from the roller conveyor;
- the pulling system, hydraulically controlled by the control device of the machine, and the positioning and guiding system for the insertion of the section into the shearing module allow easily setting the length of the sheared section stretch. Cutting lengths varying between 30 cm and 120 cm can thus be obtained working safely;
- in known cutting systems, the pulling takes place through the movement of rollers or belts, while in the device according to the invention the roller conveyor is of the idle type and has only a function of supporting the section;
- the system for holding, engraving and breaking the section includes means movable on independent channels, which can thus be operated independently. For example, the engraver and at least one of the two holding and pulling means can be moved to the respective rest positions before the breaking of the section, which allows longer component life and fewer machine failures;
- when operated for cutting tracks, the machine provides the inlet of each track with the "mushroom" positioned at the top and the engraving takes place precisely on the wing. This system minimizes the risk that some track stretches may bend without breaking.

Finally, it is clear that several changes and variations may be made to the device thus conceived, all falling within the invention; moreover, all details can be replaced with technically equivalent elements. In the practice, the materials used as well as the sizes, can be whatever, according to the technical requirements.

## Claims

1. Machine (10) for cutting metal sections, in particular for cutting railway line tracks, comprising at least one box-shaped frame (14) arranged for enclosing:
- motorized cutting means (11) for cutting at least one metal section (13), said motorized cutting means (11) comprising:
- at least one contrasting cylinder (18) and at least one breaking cylinder (19), said contrasting (18) and breaking (19) cylinders being configured for translating along their symmetry axes to engage said metal section (13) so as to generate a breaking bending moment on said metal section (13) for the bending failure of said metal section (13), and
- at least one engraver (21) adapted to make an engraving (21a) on said metal section (13), said engraving (21a) being adapted to facilitate the bending failure of said metal section (13), **characterised in that** said box-shaped frame (14) contains:
- a support and guiding strip (16) arranged so that a single metal section (13) can be at least partly rested thereon and can be guided towards said motorized cutting means (11), and
- motorized holding means (17) configured for pulling said metal section (13) along said support and guiding strip (16), so as to advance said metal section (13) by a predefined stretch of variable length and for holding said metal section (13) during the cutting,
said machine (10) for cutting metal sections further comprising at least one shielding barrier (20) configured for preventing the violent spreading of metal splinters due to the bending failure of said metal section (13).

2. Machine (10) for cutting metal sections according to claim 1, **characterized in that** said contrasting (18) and breaking (19) cylinders consist of two hydraulic pistons.

3. Machine (10) for cutting metal sections according to claim 1 or 2 **characterized in that** said engraver (21) for engraving the section is an oil hydraulic piston comprising a punch drifting housed in a compartment obtained in said oil hydraulic piston.

4. Machine (10) for cutting metal sections according to any one of the preceding claims, **characterized in that** said holding means (17) are two oil hydraulic pistons whose symmetric axes are coincident, said oil hydraulic pistons being configured for simultaneously engaging said metal section (13) by grasping it and moving it towards said motorized cutting means (11).

5. Machine (10) for cutting metal sections according to any one of the preceding claims, **characterized in that** it comprises at least one section transporter (24) configured for transporting the metal section (13) towards said holding means (17).

6. Machine (10) for cutting metal sections according to any one of the preceding claims, **characterized in that** said shielding barrier (20) is made of soundproofing material, configured for absorbing the sound energy generated by said bending failure of said metal section (13), as well as for preventing the spreading of sound in the environment surrounding said machine (10) for cutting metal sections.

7. Machine (10) for cutting metal sections according to any one of the preceding claims, **characterized in that** said box-shaped frame (14) comprises at least one fragment discharger (22) configured for discharging at least one fragment (25) of said metal section (13) from said box-shaped frame (14) following the occurrence of said bending failure.

8. Machine (10) for cutting metal sections according to any one of the preceding claims, **characterized in that** said box-shaped frame (14) comprises at least one fragment conveyor (23) configured for conveying at least one fragment (25) of said metal section (13) towards said fragment discharger (22) following the occurrence of said bending failure.

9. Machine (10) for cutting metal sections according to any one of the preceding claims, **characterized in that** it is actuated by a control device which is remote controlled through a portable device.

10. System for cutting metal sections, in particular railway line tracks, comprising:
- at least one machine (10) for cutting metal sections according to any one of the claims from 1 to 9, and
- loading means (24) capable of loading at least one metal section (13) on said machine (10) for cutting metal sections.

## Patentansprüche

1. Maschine (10) zum Schneiden von Metallabschnitten, insbesondere zum Schneiden von Eisenbahnschienen, umfassend wenigstens einen kastenförmigen Rahmen (14), der angeordnet ist, um Folgendes einzuschließen:
- motorbetriebene Schneidemittel (11) zum Schneiden von wenigstens einem Metallabschnitt (13), wobei die motorbetriebenen Schneidemittel (11) Folgendes umfassen:
- wenigstens einen Gegenzylinder (18) und wenigstens einen Brechzylinder (19), wobei der Gegenzylinder (18) und der Brechzylinder (19) ausgebildet sind zur Translation längs ihrer Symmetrieachsen, um in den Metallabschnitt (13) einzugreifen, derart, dass ein Biegebruchmoment in dem Metallabschnitt (13) bei Biegeversagen des Metallabschnitts (13) erzeugt wird, und
- wenigstens eine Graviervorrichtung (21), die dazu geeignet ist, um eine Gravierung (21a) in dem Metallabschnitt (13) vorzunehmen, wobei die Gravierung (21a) dazu geeignet ist, um das Biegeversagen des Metallabschnitts (13) zu begünstigen,
**dadurch gekennzeichnet, dass**
der kastenförmige Rahmen (14) Folgendes enthält:
- einen Auflage- und Führungsstreifen (16), der derart angeordnet ist, dass ein einzelner Metallabschnitt (13) wenigstens teilweise hierauf aufgelegt und zu den motorbetriebenen Schneidemitteln (11) geführt werden kann, und
- motorbetriebene Haltemittel (17), die ausgebildet sind zum Ziehen des Metallabschnitts (13) längs des Auflage- und Führungsstreifens (16), um den Metallabschnitt (13) durch eine vordefinierte Streckung veränderlicher Länge vorzuschieben, und zum Halten des Metallabschnitts (13) während des Schneidens,
wobei die Maschine (10) zum Schneiden von Metallabschnitten ferner wenigstens einen Abschirmungsschutz (20) umfasst, der ausgebildet ist, um das Herausschleudern von Metallsplittern beim Biegeversagen des Metallabschnitts (13) zu verhindern.

2. Maschine (10) zum Schneiden von Metallabschnitten nach Anspruch 1, **dadurch gekennzeichnet, dass** der Gegenzylinder (18) und der Brechzylinder (19) aus zwei hydraulischen Kolben bestehen.

3. Maschine (10) zum Schneiden von Metallabschnitten nach Anspruch 1 oder 2, **dadurch gekennzeichnet, dass** die Graviervorrichtung (21) zum Gravieren des Abschnitts ein ölhydraulischer Kolben ist, umfassend einen Stempel, der sich in einer Kammer untergebracht bewegt, die aus dem ölhydraulischen Kolben herausgearbeitet ist.

4. Maschine (10) zum Schneiden von Metallabschnitten nach einem der vorstehenden Ansprüche, **dadurch gekennzeichnet, dass** die Haltemittel (17) zwei ölhydraulische Kolben sind, deren Symmetrieachsen zusammenfallen, wobei die ölhydraulischen Kolben ausgebildet sind für die gleichzeitige Ineingriffnahme des Metallabschnitts (13) durch Ergreifen und Bewegen desselben zu den motorbetriebenen Schneidemitteln (11).

5. Maschine (10) zum Schneiden von Metallabschnitten nach einem der vorstehenden Ansprüche, **dadurch gekennzeichnet, dass** sie wenigstens eine Abschnitttransportvorrichtung (24) umfasst, die ausgebildet ist, um den Metallabschnitt (13) zu den Haltemitteln (17) zu transportieren.

6. Maschine (10) zum Schneiden von Metallabschnitten nach einem der vorstehenden Ansprüche, **dadurch gekennzeichnet, dass** der Abschirmungsschutz (20) aus einem schalldämmenden Material hergestellt ist, das ausgebildet ist zum Absorbieren der Schallenergie, die durch das Biegeversagen des Metallabschnitts (13) erzeugt wird, sowie zum Verhindern der Schallausbreitung in den die Maschine (10) zum Schneiden von Metallabschnitten umgebenden Raum.

7. Maschine (10) zum Schneiden von Metallabschnitten nach einem der vorstehenden Ansprüche, **dadurch gekennzeichnet, dass** der kastenförmige Rahmen (14) wenigstens eine Bruchstückausstoßvorrichtung (22) umfasst, die ausgebildet ist, um nach Auftreten des Biegeversagens wenigstens ein Bruchstück (25) des Metallabschnitts (13) aus dem kastenförmigen Rahmen (14) auszustoßen.

8. Maschine (10) zum Schneiden von Metallabschnitten nach einem der vorstehenden Ansprüche, **dadurch gekennzeichnet, dass** der kastenförmige Rahmen (14) wenigstens eine Bruchstückzuführvorrichtung (23) umfasst, die ausgebildet ist, um nach Auftreten des Biegeversagens wenigstens ein Bruchstück (25) des Metallabschnitts (13) zu der Bruchstückausstoßvorrichtung (22) zuzuführen.

9. Maschine (10) zum Schneiden von Metallabschnitten nach einem der vorstehenden Ansprüche, **dadurch gekennzeichnet, dass** sie durch eine Steuereinrichtung betätigt wird, die durch eine tragbare Vorrichtung gesteuert wird.

10. System zum Schneiden von Metallabschnitten, insbesondere Eisenbahnschienen, umfassend:
- wenigstens eine Maschine (10) zum Schneiden von Metallabschnitten nach einem der Ansprüche von 1 bis 9, und
- Lademittel (24), die in der Lage sind, wenigstens einen Metallabschnitt (13) auf die Maschine (10) zum Schneiden von Metallabschnitten zu laden.

## Revendications

1. Machine (10) pour couper des sections métalliques, en particulier pour couper des rails de ligne de chemin de fer, comprenant au moins un châssis en forme de caisson (14) agencé pour renfermer :
- des moyens de coupe motorisés (11) pour couper au moins une section métallique (13), lesdits moyens de coupe motorisés (11) comprenant :
- au moins un cylindre d'opposition (18) et au moins un cylindre de rupture (19), lesdits cylindres d'opposition (18) et de rupture (19) étant configurés pour effectuer une translation suivant leurs axes de symétrie pour engager ladite section métallique (13) de manière à générer un moment de flexion de rupture sur ladite section métallique (13) pour la défaillance par flexion de ladite section métallique (13), et
- au moins un graveur (21) adapté pour effectuer une gravure (21a) sur ladite section métallique (13), ladite gravure (21a) étant adaptée pour faciliter la défaillance par flexion de ladite section métallique (13),
**caractérisé en ce que**
ledit châssis en forme de caisson (14) contient :
- une bande de support et de guidage (16) agencée de manière qu'une unique section métallique (13) puisse être appuyée au moins en partie sur celle-ci et puisse être guidée vers lesdits moyens de coupe motorisés (11), et
- des moyens de maintien motorisés (17) configurés pour tirer ladite section métallique (13) le long de ladite bande de support et de guidage (16), de manière à faire avancer ladite section métallique (13) avec un étirement prédéfini de longueur variable et pour maintenir ladite section métallique (13) durant la coupe,
ladite machine (10) pour couper des sections métalliques comprenant en outre au moins une barrière de protection (20) configurée pour empêcher la dissémination violente d'éclats métalliques due à la défaillance par flexion de ladite section métallique (13) .

2. Machine (10) pour couper des sections métalliques selon la revendication 1, **caractérisée en ce que** lesdits cylindres d'opposition (18) et de rupture (19) sont constitués par deux pistons hydrauliques.

3. Machine (10) pour couper des sections métalliques selon la revendication 1 ou 2, **caractérisée en ce que** ledit graveur (21) pour graver la section est un piston hydraulique à huile comprenant un poinçon dérivant logé dans un compartiment obtenu dans ledit piston hydraulique à huile.

4. Machine (10) pour couper des sections métalliques selon l'une quelconque des revendications précédentes, **caractérisée en ce que** lesdits moyens de maintien (17) sont deux pistons hydrauliques à huile dont les axes de symétrie sont coïncidents, lesdits pistons hydrauliques à huile étant configurés pour engager simultanément ladite section métallique (13) en la saisissant et en la déplaçant vers lesdits moyens de coupe motorisés (11) .

5. Machine (10) pour couper des sections métalliques selon l'une quelconque des revendications précédentes, **caractérisée en ce qu'**il comprend au moins un transporteur de section (24) configuré pour transporter la section métallique (13) vers lesdits moyens de maintien (17).

6. Machine (10) pour couper des sections métalliques selon l'une quelconque des revendications précédentes, **caractérisée en ce que** ladite barrière de protection (20) est réalisée en matériau insonorisant, configuré pour absorber l'énergie sonore générée par ladite défaillance par flexion de ladite section métallique (13), ainsi que pour empêcher la diffusion du son dans l'environnement entourant ladite machine (10) pour couper des sections métalliques.

7. Machine (10) pour couper des sections métalliques selon l'une quelconque des revendications précédentes, **caractérisée en ce que** ledit châssis en forme de caisson (14) comprend au moins un dispositif de déchargement de fragments (22) configuré pour décharger au moins un fragment (25) de ladite section métallique (13) dudit châssis en forme de caisson (14) à la suite de la survenance de ladite défaillance par flexion.

8. Machine (10) pour couper des sections métalliques selon l'une quelconque des revendications précédentes, **caractérisée en ce que** ledit châssis en forme de caisson (14) comprend au moins un transporteur de fragments (23) configuré pour transporter au moins un fragment (25) de ladite section métallique (13) vers ledit dispositif de déchargement de fragments (22) à la suite de la survenance de ladite défaillance par flexion.

9. Machine (10) pour couper des sections métalliques selon l'une quelconque des revendications précédentes, **caractérisée en ce qu'**elle est actionnée par un dispositif de commande qui est commandé à distance par le biais d'un dispositif portable.

10. Système pour couper des sections métalliques, en particulier des rails de ligne de chemin de fer, comprenant :
- au moins une machine (10) pour couper des sections métalliques selon l'une quelconque des revendications 1 à 9, et
- des moyens de chargement (24) capables de charger au moins une section métallique (13) sur ladite machine (10) pour couper des sections métalliques.
